# EUROPÄISCHE PATENTSCHRIFT

(11) **EP 1 298 018 B1**
(45) Veröffentlichungstag und Bekanntmachung des Hinweises auf die Patenterteilung: **25.01.2006**
(21) Anmeldenummer: 02016626.0
(22) Anmeldetag: 25.07.2002
(51) Int. Cl.: B60R 25/00, B60R 25/04

(54) **Verfahren und Vorrichtung sowie Steuereinheit zur Überwachung eines Bussystems**
Bus system monitoring method, device and control unit
Procédé, dispositif et unité de contrôle pour la surveillance d'un système de bus

(30) Priorität: 26.09.2001 DE 10147442
(43) Veröffentlichungstag der Anmeldung: 02.04.2003
(73) Patentinhaber: ROBERT BOSCH GMBH, 70442 Stuttgart (DE)
(72) Erfinder: Hentsch, Ingmar, 42369 Wuppertal (DE)

(56) Entgegenhaltungen:
- EP-A- 0 642 959
- DE-A- 19 530 719
- DE-A- 19 530 726
- DE-A- 19 840 484
- Specks, J. W., Dr.-Ing; Rajnàk, A.: "LIN-Protokoll, Entwicklungswerkzeuge und Software-Schnittstelle für lokale Datennetzwerke im Kraftfahrzeug"; VDI-Berichte 1547, Tagung "Elektronik im Kraftfahrzeug"; VDI-Verlag GmbH, Düsseldorf (DE); 05.10.2000; Seiten 227 ff. (1-24) XP002261302

## Beschreibung

### Stand der Technik

Die Erfindung betrifft ein Verfahren und eine Vorrichtung sowie eine Steuereinheit zur Überwachung eines Fahrzeug-Bussystems mit wenigstens drei Teilnehmern für ein Fahrzeug mit einer Antriebseinheit und einem verschließbaren Fahrzeugbereich gemäß dem jeweiligen Oberbegriff der unabhängigen Ansprüche 1, 12 und 13, entsprechend der DE 195 30 726 A1.

Die Vernetzung von Steuergeräten, Sensorik und Aktuatorik mit Hilfe eines Kommunikationssystems, also eines Bussystems, hat in den letzten Jahren beim Bau von modernen Kraftfahrzeugen drastisch zugenommen. Synergieeffekte durch Verteilung von Funktionen auf mehrere Steuereinheiten oder Sensorik bzw. Aktuatorik können dabei erzielt werden. Man spricht dabei von verteilten Systemen. Die Kommunikation zwischen verschiedenen Teilnehmern solcher verteilter Systeme findet mehr und mehr über einen Bus bzw. ein Bussystem statt. Der Kommunikationsverkehr auf dem Bussystem, Zugriffs- und Empfangsmechanismen sowie Fehlerverhandlungen werden über ein Protokoll geregelt.

Zukünftige Türarchitekturen sehen eine vernetzte Struktur aller in ihr befindlichen elektrischen Komponenten vor.

Schloss, Spiegel, Fensterheber und Bedienelement, usw. werden an ein Bussystem angeschlossen und von einem zentralen Steuergerät bzw. einer zentralen Steuereinheit angesteuert. Ein solches Bussystem besteht aus einer Datenleitung, auf der bidirektional Daten zwischen den angeschlossenen Teilnehmern ausgetauscht werden.

Ein Beispiel für ein solches Bussystem ist der LIN (local interconnect network siehe beispielsweise Speck, J.W.; Rajnák, A.: "LIN-Protokoll, Entwicklungswerkzeuge und Software-Schnittstelle für Lokale Datennetzwerke im Kraftfahrzeug"; VDI-Berichte 1547/2000, VDI-Verlag Düsseldorf (DE), 05.10.2000, Seiten 227-250.), ein Master-Slave-Bus, dessen Teilnehmer über eine logische Busleitung verbunden sind. Jedem Bus gehören maximal ein Master und bis zu 64 Slaves an. Als Übertragungsmedium dient eine ungeschirmte physikalische Eindrahtleitung. Das LIN-Protokoll teilt den Sende- und Empfangsprozess in zwei Tasks ein. Die Mastertask beinhaltet die Synchronisation und Adressierung, und die Slavetask beinhaltet die Daten. Beides - Mastertask und Slavetask - sind in einem Nachrichtenrahmen, dem sogenannten message frame, zusammengefasst. Ein Master kann sowohl die Mastertask als auch die Slavetask ausführen. Jede Datenübertragung besteht aus einem Botschaftsrahmen (message frame), in dem sowohl die Synchronisations- als auch die Dateninformationen übertragen werden. Zu Beginn jeder Botschaft oder Nachricht sendet der Master eine Synchronisationsunterbrechung im Mastertask, den sogenannten SynchBreak, um die Slaves aus einem möglichen Ruhezustand zu holen und Synchronisation zu ermöglichen. Im Anschluss folgt dann noch reine Synchronisationsinformation sowie ein Kennzeichen, welches den Dateninhalt jedes Nachrichtenrahmens eindeutig beschreibt und ebenfalls codiert die Länge der nachfolgenden Daten wiedergibt.

So wie das genannte Beispiel des LIN-Busses gibt es eine Vielzahl von Bussystemen, die als Kommunikationsverbindung zwischen entsprechenden Teilnehmern, insbesondere in diesen verteilten Systemen bei Türarchitekturen eingesetzt werden können. Dabei gewinnt der Schutz vor unbefugtem Zugriff auf diese Systeme immer mehr an Bedeutung. Bei heutigen Bussystemen im Kraftfahrzeug wird ein Großteil der Daten ungeschützt übertragen. Wird die Busleitung von einem unberechtigten Nutzer angeschlossen, so kann er Befehle versenden, die beispielsweise das Entriegeln der Zentralverriegelung oder anderer Schließsysteme und somit ein Aufsperren des Fahrzeugs auslösen. Ein großes Problem der Einbruchssicherheit besteht somit darin, dass die Möglichkeit einer Fremdbestromung des Schließsystems oder der Schließanlage bzw. Teilen davon von außen, also außerhalb des verschließbaren Fahrzeuginnenraums, dadurch ermöglicht wird, dass Busteilnehmer außerhalb dieses verschließbaren Fahrzeuginnenraumes angeordnet sind und über diese bzw. die dorthin führenden Anschlussleitungen eine Öffnung des Fahrzeugs ermöglicht wird. Mit Schliessanlage oder Schliesssystem sind dabei alle Teile gemeint, die ein Eindringen in den Fahrzeuginnenraum bzw. den Fahrzeugbereich (Innenraum, Kofferraum) verhindern. Dazu gehören neben Schlössern auch Fensterheber bzw. die zugehörigen Verriegelungen usw.

So stellt sich die Aufgabe, ein Verfahren und eine Vorrichtung sowie eine Steuereinheit bereitzustellen, die vor solch unbefugtem Zugriff schützt.

### Vorteile der Erfindung

Gelöst wird diese Aufgabe durch ein Verfahren nach Anspruch 1 und eine Vorrichtung nach Anspruch 12 sowie eine Steuereinheit nach Anspruch 13 zur Überwachung eines Fahrzeug-Bussystems mit wenigstens drei Teilnehmern für ein Fahrzeug mit einer Antriebseinheit und einem verschließbaren Fahrzeugbereich, wobei von den wenigstens drei Teilnehmern des Bussystems genau ein erster Teilnehmer als übergeordneter Teilnehmer oder Master ausgebildet ist und jede Datenübertragung auf dem Bussystem initiiert, wobei wenigstens ein zweiter Teilnehmer als Element einer Fahrzeug-Schliessanlage ausgebildet ist und wenigstens ein dritter Teilnehmer außerhalb des verschließbaren Fahrzeugbereichs angeordnet ist. Vorteilhafter Weise überwacht der erste Teilnehmer, also der Master bzw. die Steuereinheit die Datenübertragung derart, dass der erste Teilnehmer bei jeder Datenübertragung auf dem Bussystem, die nicht durch ihn selbst initiiert wurde, Maßnahmen einleitet, die eine Übertragung dieser Daten verhindert.

In einer vorteilhaften Ausgestaltung überwacht der erste Teilnehmer, also der Master bzw. die Steuereinheit die Datenübertragung derart, dass in wenigstens einem bestimmten Betriebszustand des Fahrzeugs der erste Teilnehmer bei jeder Datenübertragung auf dem Bussystem, Maßnahmen einleitet, die eine Übertragung dieser Daten verhindert.

In einer vorteilhaften Ausgestaltung wird bei jeder Datenübertragung auf dem Bussystem ein Kennzeichen übertragen, wobei das Kennzeichen eindeutig einem der wenigstens drei Teilnehmer zugeordnet ist oder den Daten eindeutig zugeordnet ist, die ausschließlich von einem der wenigstens drei Teilnehmer kommen können. Dabei sind alle Kennzeichen im übergeordneten Teilnehmer, also dem Master zum Vergleich vorrätig, wobei bei Gleichheit des Kennzeichens einer Datenübertragung mit einem im übergeordneten Teilnehmer zur Verfügung stehenden Kennzeichen eine Datenübertragung durch den übergeordneten Teilnehmer, also den Master, verhindert wird.

Vorteilhafter Weise ist der wenigstens eine Betriebszustand ein gesicherter Stand-By-Modus des Fahrzeugs derart, dass das Fahrzeug, also insbesondere der Fahrzeugbereich, verschlossen ist und die Antriebseinheit nicht in Betrieb ist. Eine Aktivität auf dem Bussystem, initiiert durch den Master, ist dabei nicht ausgeschlossen, sondern in der Regel vorhanden.

In einer vorteilhaften Ausgestaltung erfolgt die Verhinderung der Datenübertragung dadurch, dass die zu übertragenden Daten durch den übergeordneten Teilnehmer, also den Master bzw. die Steuereinheit, wenigstens teilweise zerstört werden. Dabei können die zu übertragenden Daten zweckmäßiger Weise dadurch zerstört werden, dass die Daten mit einem für das Bussystem dominanten Datensignal überschrieben werden. Ebenso können die zu übertragenden Daten durch den übergeordneten Teilnehmer, also den Master, dadurch zerstört werden, dass das gesamte Bussystem auf Massepotential gelegt wird und so eine Datenübertragung gesperrt wird.

In einer vorteilhaften Weiterbildung wird nach einer Wartezeit der übergeordnete Teilnehmer die Sperrung der Datenübertragung aufheben und erneut überwachen, ob eine Datenübertragung erfolgt, die nicht durch Ihn initiiert wurde, wobei dann, für den Fall, dass dies geschieht, die Datenübertragung erneut gesperrt wird und im anderen Fall, dass also eine nicht durch den Master initiierte Datenübertragung nicht vorliegt, die Sperrung aufgehoben wird und in den Normalbetrieb übergegangen wird.

In einer bevorzugten Ausführungsform handelt es sich bei dem Bussystem um ein LIN-Bussystem.

Durch die genannten Vorteile und Merkmale ergibt sich vorteilhafter Weise eine erhöhte Einbruchssicherheit und die Tatsache, dass keine elektrische Öffnung des Schlosses von außen möglich ist. Vorteilhafter Weise kann eine solche Fremdbeeinflussung an die Alarmanlage weitergegeben werden, wobei diese dann mit Alarm, also Signalisierung (akustisch oder optisch sowie Meldung an eine Zentrale via Mobilfunk) reagieren kann.

Der beschriebene erfindungsgemäße Gegenstand ermöglicht so die Verhinderung einer Fremdbeeinflussung der Türelektronik insbesondere bei einem LIN-Bussystem von außen und ermöglicht dessen Signalisierung.

Weitere Vorteile und vorteilhafte Ausgestaltungen ergeben sich aus der Beschreibung und den Merkmalen der Ansprüche.

### Zeichnung

Die Erfindung wird im Weiteren anhand der dargestellten Zeicchnung näher erläutert. Die Zeichnung zeigt eine Türarchitektur im Fahrzeuginnenbereich, bei der die einzelnen Teilnehmer über eine Busleitung bzw. ein Bussystem miteinander verbunden sind.

### Beschreibung der Ausführungsbeispiele

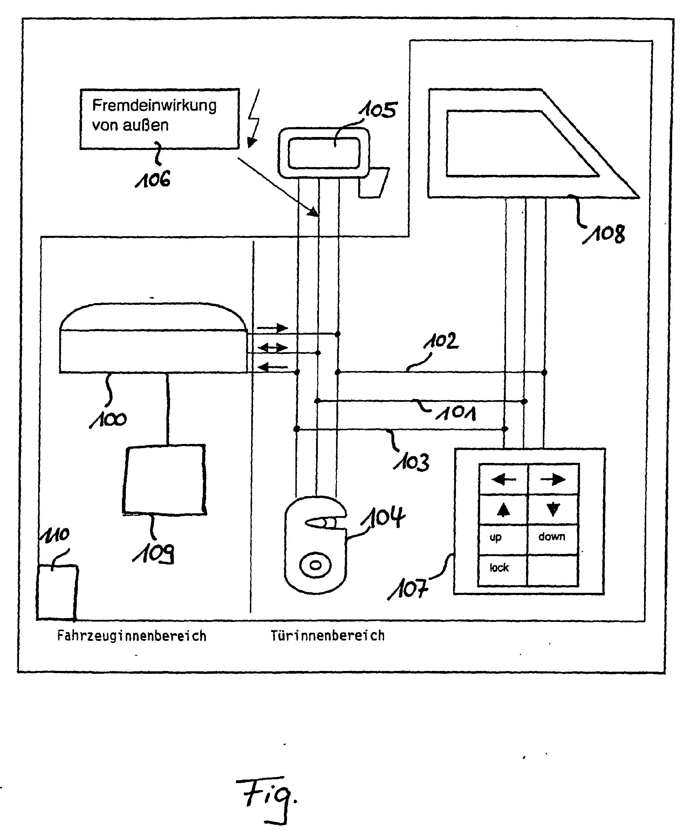

Figur 1 zeigt ein im Fahrzeugbereich bzw. Fahrzeuginnenbereich angebrachtes Steuergerät 100 sowie im Türinnenbereich, und somit ebenfalls im Fahrzeuginnenbereich angebrachten Busteilnehmern, einem Schloss 104, einem Fensterheber 108 und einem Bedienelement 107. Im Außenbereich des Fahrzeugs angebracht ist ein Spiegel 105. Diese Teilnehmer 100, 104, 105, 107 und 108 stehen über eine Datenleitung bzw. einen Bus 101 miteinander in Verbindung.

Ebenso ist vorgeschlagen, diese über eine gemeinsame Masseleitung 103 und eine gemeinsame Spannungsversorgung U_{bat} 102 miteinander zu verbinden.

Dabei ist die Datenleitung insbesondere bidirektional ausgelegt, was einen direkten Datenaustausch zwischen Steuergerät 100 und den Einzelelementen 105, 104, 107 und 108 möglich macht. Die Kommunikation auf dem Bus 101 wird durch die Steuereinheit 100, die hier den Busmaster darstellt, initiiert; d. h. ein Nachrichtenrahmen wird mit einem Synchronisationssignal oder SynchBreak bei LIN-Busapplikation von der Steuereinheit gestartet. In der jeweiligen Slavetask des jeweiligen Busteilnehmers überträgt dieser dann Daten an den Master, also die Steuereinheit 100.

Bei einer solchen, wie hier beispielhaft vorgestellten vernetzten Struktur, ist es möglich, da der Spiegel mit dem Schloss über ein Bussystem verbunden ist, den Spiegel als außerhalb des Fahrzeuginnenbereiches lokalisierten Busteilnehmer zu demontieren und so an das Leitungssystem, insbesondere die Datenleitung bzw. den Bus 101, in der Tür zu gelangen. Dies ist mit Block 106 dargestellt. Neben einem Spiegel als externem Busteilnehmer sind auch Anhängerkupplungen oder Verbindungen zum Anhänger, elektrische Antennen oder Ähnliches als Angriffspunkt für unbefugten Zugriff denkbar.

Dabei wird als Teil der Schließanlage neben dem Schloss 104 ebenso ein Fensterheber 108 bzw. zugehöriges Bedienteil 107 mit Verriegelung und Ähnlichem betrachtet; also all das, was verhindert, dass man in den Fahrzeugbereich, insbesondere den Fahrzeuginnenraum gelangen kann.

Tritt nun eine Datenübertragung, die nicht durch den Master initiiert wurde (bei LIN erkennbar durch z.B. SynchBreak), auf, kann dies nur bedeuten, dass eine Fremdeinwirkung von außen vorliegt. Als Folge wird eine Datenübertragung durch den Master verhindert. Beispielsweise indem er das nicht durch ihn initiierte Datensignal dominant überschreibt, teilweise zerstört, anderweitig ungültig macht oder eine Sperrung dadurch erzielt, dass die Datenleitung 101 auf Masse 103 gezogen wird. Nach einer Wartezeit wird dann erneut geprüft, ob eine unberechtigte Datenübertragung auf dem Bussystem vorliegt. Ist dies der Fall, bleibt die Sperrung aufrechterhalten; ist dies nicht der Fall, wird die Sperrung aufgehoben und die Masseverbindung gekappt. Durch die Erfindung ist somit eine Überwachung der Datenleitung vom zentralen Steuergerät bzw. der zentralen Steuereinheit 100 zu den Endgeräten in der Tür möglich. Versucht nun ein fremdes elektronisches Gerät, eine Datenübertragung auf den Bus herzustellen, wird die Datenkommunikation vom Steuergerät bzw. der Steuereinheit 100 aus gesperrt.

Insbesondere bei einer LIN-Busanwendung handelt es sich um eine Master-Slave-Anwendung, wobei die Steuereinheit hier, wie gesagt, den Master darstellt und die verteilten Elektroniken Schloss, Fensterheber, Spiegel, Bedienelement als Slaves ausgelegt sind. Soll ein Slave angesteuert werden, ist dies nur vom Master möglich.

Braucht ein Master Daten von einem Slave, so ist dies nur durch eine Anfrage von ihm selbst möglich.

Wird das Fahrzeug nun in einem bestimmten Betriebszustand belassen, eben in einem sogenannten gesicherten Stand-By-Modus also, mit verriegeltem bzw. verschlossenem Fahrzeuginnenbereich und nicht aktivierter Antriebseinheit 110, werden nur Busteilnehmer im Fahrzeuginnenbereich durch Iniziierung der Kommunikation vom Master, also der Steuereinheit 100, auf Status abgefragt. In einem speziellen Fall, bei abgestelltem und verschlossenem Fahrzeug, ist das Schloss der einzige Busteilnehmer, der zyklisch angesteuert werden muss, um dem Master eine mechanische Entriegelung oder seinen aktuellen Zustand für die Alarmanlagenfunktion bezüglich der Alarmanlage 109 mitzuteilen. Dann kann jedes Signal, dass nicht dem abgefragten Schlosssignal bzw. den abgefragten Signalen der übrigen Innenbereichsteilnehmer entspricht, also z.B. vom Spiegel erkennbar durch Kennzeichen unterdrückt bzw. zerstört werden, z.B. durch dominantes Überschreiben und/oder das Legen der Busleitung auf Massepotential.

Der serielle Datenein-/Ausgangsport eines Mikrocontrollers in der Steuereinheit 100 kann außerdem vorzugsweise während der Datenübertragungspausen die Datenbusleitung abhorchen. Also in den Phasen in denen keine von Ihm initiierte Datenübertragung erfolgt. Beim LIN-Bus ist dies Beispielsweise der Interframe-Space. Er erkennt dann ungewollte Signalveränderungen auf dem Bus. In dieser speziellen Form des Abhorchens der Datenübertragungspausen kann dies heissen, dass bei Signaländerungen ein unbefugter Zugriff erfolgt.

Entspricht darüberhinaus ein empfangenes Datenwort dem einer Adresse eines an dem Bus angeschlossenen Verbrauchers, so kann es sich sicher nur um eine fremde Beeinflussung des Systems handeln. In diesem Fall kann das Steuergerät die Busleitung aktiv auf Massepotential legen. Eine Datenübertragung auf dem Bus ist jetzt nicht mehr möglich. Somit kann das Schloss nicht mehr elektrisch entriegelt werden. Der Alarmanlage 109 kann eine Meldung übersandt werden, dass ein Einbruchsversuch vorliegt, was eine entsprechende Reaktion der Alarmanlage nach sich zieht.

Nach einer Wartezeit kann dann das Steuergerät im Bus bezüglich einer Signaländerung abgefragt werden. Ist keine Änderung zu erkennen, bleibt der gesperrte Zustand erhalten. Ist wieder eine Kommunikation zwischen dem Master und den Slaves möglich, kann die Steuereinheit wieder in den Normalbetrieb umschalten, also die Sperrung aufheben.

## Patentansprüche

1. Verfahren zur Überwachung eines Fahrzeug-Bussystems (101-103) mit wenigstens drei Teilnehmern (100, 104, 105, 107, 108) für ein Fahrzeug mit einer Antriebseinheit und einem verschließbaren Fahrzeugbereich, wobei von den wenigstens drei Teilnehmern des Bussystems (101) genau ein erster Teilnehmer (100) als übergeordneter Teilnehmer ausgebildet ist und jede Datenübertragung auf dem Bussystem initiiert, wobei wenigstens ein zweiter Teilnehmer (104) als Element einer Fahrzeng-Schliessanlage ausgebildet ist, und wenigstens ein dritter Teilnehmer (105) ausserhalb des verschliessbaren Fahrzeugbereiches angeordnet ist, **dadurch gekennzeichnet, dass** der erste Teilnehmer (100) die Datenübertragung derart überwacht, dass der erste Teilnehmer bei jeder Datenübertragung auf dem Bussystem (101-103), die nicht durch ihn initiiert wurde, Maßnahmen einleitet, um eine Übertragung der Daten zu verhindern.

2. Verfahren nach Anspruch 1, **dadurch gekennzeichnet, dass** in wenigstens einem bestimmten Betriebszustand des Fahrzeugs der erste Teilnehmer bei jeder Datenübertragung auf dem Bussystem, Maßnahmen einleitet, um eine Übertragung der Daten zu verhindern.

3. Verfahren nach Anspruch 1, **dadurch gekennzeichnet, dass** bei jeder Datenübertragung auf dem Bussystem ein Kennzeichen übertragen wird und das Kennzeichen eindeutig einem der wenigstens drei Teilnehmer zugeordnet ist, wobei alle Kennzeichen im übergeordneten Teilnehmer zum Vergleich zur Verfügung stehen und bei Gleichheit des Kennzeichens einer Datenübertragung mit einem im übergeordneten Teilnehmer zur Verfügung stehenden Kennzeichen eine Datenübertragung durch den übergeordneten Teilnehmer verhindert wird.

4. Verfahren nach Anspruch 2, **dadurch gekennzeichnet, dass** der wenigstens eine Betriebszustand einem gesicherten Standby-Modus des Fahrzeugs derart entspricht, dass das Fahrzeug, insbesondere der Fahrzeugbereich, verschlossen und die Antriebseinheit nicht in Betrieb ist.

5. Verfahren nach Anspruch 1, **dadurch gekennzeichnet, dass** eine Datenübertragung **dadurch** verhindert wird, dass die zu übertragenden Daten durch den übergeordneten Teilnehmer wenigstens teilweise zerstört werden.

6. Verfahren nach Anspruch 5, **dadurch gekennzeichnet, dass** die zu übertragenden Daten durch den übergeordneten Teilnehmer **dadurch** zerstört werden, dass die Daten mit einem für das Bussystem dominanten Datensignal überschrieben werden.

7. Verfahren nach Anspruch 5, **dadurch gekennzeichnet, dass** die zu übertragenden Daten durch den übergeordneten Teilnehmer **dadurch** zerstört werden, dass das Bussystem auf Massepotential gelegt wird und so eine Datenübertragung gesperrt wird.

8. Verfahren nach Anspruch 7, **dadurch gekennzeichnet, dass** nach einer Wartezeit der übergeordnete Teilnehmer die Sperrung der Datenübertragung aufhebt und erneut überwacht, ob eine Datenübertragung erfolgt, die nicht durch ihn initiiert wurde wobei dann die Datenübertragung erneut gesperrt wird und sonst die Sperrung aufgehoben wird.

9. Verfahren nach Anspruch 1, **dadurch gekennzeichnet**, das der erste Teilnehmer in Datenübertragungspausen das Bussystem auf Signaländerungen überwacht und bei Auftritt solcher Signaländerungen entsprechend Massnahmen einleitet.

10. Verfahren nach Anspruch 1, **dadurch gekennzeichnet, dass** es sich bei dem Bussystem um ein LIN-Bussystem handelt.

11. Verfahren nach Anspruch 1, **dadurch gekennzeichnet**, das bei einer Verhinderung der Datenübertragung auf dem Bussystem durch den ersten Teilnehmer, dies an eine Alarmanlage (109) im Fahrzeug übermittelt wird.

12. Vorrichtung zur Überwachung eines Fahrzeug-Bussystems (101 - 103), für ein Fahrzeug mit einer Antriebseinheit und einem verschließbaren Fahrzeugbereich, wobei das Bussystem wenigstens drei Teilnehmer (100, 104, 105, 107, 108) aufweist, wobei von den wenigstens drei Teilnehmern des Bussystems genau ein erster Teilnehmer (100) als übergeordneter Teilnehmer ausgebildet ist und jede Datenübertragung auf dem Bussystem initiiert, wobei wenigstens ein zweiter Teilnehmer (104) als Element eine Fahrzeug-Schliessanlage ausgebildet ist, und wenigstens ein dritter Teilnehmer (105) ausserhalb des verschliessbaren Fahrzeugbereichs angeordnet ist, **dadurch gekennzeichnet, dass** der erste Teilnehmer (100) die Datenübertragung derart überwacht, dass der erste Teilnehmer bei jeder Datenübertragung auf dem Bussystem (101 - 103), die nicht durch ihn initiiert wurde, Maßnahmen einleitet, um eine Übertragung der Daten zu verhindern.

13. Steuereinheit (100) zur Überwachung eines Fahrzeug-Bussystems (101 - 103), für ein Fahrzeug mit einer Antriebseinheit und einem verschließbaren Fahrzeugbereich, wobei das Bussystem wenigstens drei Teilnehmer (100, 104, 105, 107, 108) aufweist, wobei von den wenigstens drei Teilnehmern des Bussystems die Steuereinheit (100) als übergeordneter erster Teilnehmer (100) ausgebildet ist und jede Datenübertragung auf dem Bussystem initiiert, wobei wenigstens ein zweiter Teilnehmer (104) als Element einer Fahrzeug-Schliessanlage ausgebildet ist, und wenigstens ein dritter Teilnehmer (105) ausserhalb des verschliessbaren Fahrzeugbereichs angeordnet ist, **dadurch gekennzeichnet, dass** die Steuereinheit (100) die Datenübertragung derart überwacht, dass diese bei jeder Datenübertragung auf dem Bussystem, die nicht durch die Steuereinheit selbst initiiert wurde, Maßnahmen einleitet, um eine Übertragung der Daten zu verhindern.

## Claims

1. Method for monitoring a vehicle bus system (101-103) having at least three users (100, 104, 105, 107, 108) for a vehicle having a drive unit and a lockable vehicle area, wherein, of the at least three users of the bus system (101), precisely a first user (100) is embodied as a superordinate user and initiates every transmission of data on the bus system, wherein at least a second user (104) is embodied as an element of a vehicle lock system, and at least a third user (105) is arranged outside the lockable vehicle area, **characterized in that** the first user (100) monitors the transmission of data in such a way that whenever there is a data transmission on the bus system (101-103) which was not initiated by the first user, said first user initiates measures to prevent transmission of the data.

2. Method according to Claim 1, **characterized in that**, whenever there is a transmission of data on the bus system in at least one specific operating state of the vehicle, the first user initiates measures to prevent transmission of the data.

3. Method according to Claim 1, **characterized in that**, whenever there is a transmission of data on the bus system, an identifier is transmitted and the identifier is uniquely assigned to one of the at least three users, wherein all the identifiers are available in the superordinate user for comparison, and when there is identity between the identifier of a transmission of data and an identifier which is available in the superordinate user a transmission of data is prevented by the superordinate user.

4. Method according to Claim 2, **characterized in that** the at least one operating state corresponds to a secured standby mode of the vehicle such that the vehicle, in particular the area of the vehicle, is closed and the drive unit is not in operation.

5. Method according to Claim 1, **characterized in that** a transmission of data is prevented by the data which is to be transmitted being at least partially disrupted by the superordinate user.

6. Method according to Claim 5, **characterized in that** the data which is to be transmitted is disrupted by the superordinate user by a data signal which is dominant for the bus system being overwritten over the data.

7. Method according to Claim 5, **characterized in that** the data which is to be transmitted is disrupted by the superordinate user by applying the bus system to earth potential and thus disabling a transmission of data.

8. Method according to Claim 7, **characterized in that** after a waiting time the superordinate user cancels the disabling of the transmission of data and monitors again to determine whether a transmission of data which was not initiated by it has taken place, in which case the transmission of data is disabled again and otherwise the disabling is cancelled.

9. Method according to Claim 1, **characterized in that** the first user monitors the bus system for changes in signals in pauses in the transmission of data and when such changes in signals occur it correspondingly initiates measures.

10. Method according to Claim 1, **characterized in that** the bus system is a LIN bus system.

11. Method according to Claim 1, **characterized in that** when the transmission of data on the bus system is prevented by the first user, this is communicated to an alarm system (109) in the vehicle.

12. Device for monitoring a vehicle bus system (101-103) for a vehicle having a drive unit and a lockable vehicle area, wherein the bus system has at least three users (100, 104, 105, 107, 108), wherein, of the at least three users of the bus system, precisely a first user (100) is embodied as a superordinate user and initiates every transmission of data on the bus system, wherein at least a second user (104) is embodied as an element of a vehicle lock system, and at least a third user (105) is arranged outside the lockable vehicle area, **characterized in that** the first user (100) monitors the transmission of data in such a way that whenever there is a transmission of data on the bus system (101-103) which was not initiated by the first user, said first user initiates measures to prevent transmission of the data.

13. Control unit (100) for monitoring a vehicle bus system (101-103) for a vehicle having a drive unit and a lockable vehicle area, wherein the bus system has at least three users (100, 104, 105, 107, 108), wherein, of the at least three users of the bus system, the control unit (100) is embodied as a superordinate first user (100) and initiates every transmission of data on the bus system, wherein at least a second user (104) is embodied as an element of a vehicle lock system, and at least a third user (105) is arranged outside the lockable vehicle area, **characterized in that** the control unit (100) monitors the transmission of data in such a way that whenever there is a transmission of data on the bus system which was not initiated by the control unit itself, said control unit initiates measures to prevent transmission of the data.

## Revendications

1. Procédé pour surveiller un système de bus (101 à 103) de véhicule comportant au moins trois participants (100, 104, 105, 107, 108) et destiné à un véhicule muni d'une unité d'entraînement et d'une zone verrouillable de véhicule, selon lequel exactement un premier participant (100) parmi les au moins trois participants du système de bus (101) sert de participant de niveau supérieur et lance chaque transmission de données sur le système de bus, au moins un deuxième participant (104) servant d'élément d'une installation qui verrouille le véhicule et au moins un troisième participant (105) étant placé hors de la zone verrouillable du véhicule,
**caractérisé en ce que**
le premier participant (100) surveille la transmission des données de telle manière que le premier participant, à chaque fois qu'il y a sur le système de bus (101 à 103) une transmission de données qu'il n'a pas lancée, prend des mesures afin d'empêcher que ces données soient transmises.

2. Procédé selon la revendication 1,
**caractérisé en ce que**
dans au moins un état de fonctionnement donné du véhicule, le premier participant, à chaque fois que des données sont transmises sur le système de bus, prend des mesures afin d'empêcher que ces données soient transmises.

3. Procédé selon la revendication 1,
**caractérisé en ce que**
un identificateur est transmis à chaque fois que des données sont transmises sur le système de bus et l'identificateur est associé de manière univoque à l'un des au moins trois participants, tous les identificateurs dans le participant de niveau supérieur étant disponibles pour une comparaison et si l'identificateur d'une transmission de données est identique à un identificateur disponible dans le participant de niveau supérieur, le participant de niveau supérieur empêche que les données soient transmises.

4. Procédé selon la revendication 2,
**caractérisé en ce que**
l'au moins un état de fonctionnement correspond à un état d'attente sûr du véhicule de telle manière que le véhicule, en particulier la zone de véhicule, soit verrouillé et que l'unité d'entraînement ne fonctionne pas.

5. Procédé selon la revendication 1,
**caractérisé en ce que**
une transmission de données est empêchée du fait que les données à transmettre sont au moins en partie détruites par le participant de niveau supérieur.

6. Procédé selon la revendication 5,
**caractérisé en ce que**
les données à transmettre sont détruites par le participant de niveau supérieur du fait que les données sont écrasées à l'aide d'un signal de données dominant pour le système de bus.

7. Procédé selon la revendication 5,
**caractérisé en ce que**
les données à transmettre sont détruites par le participant de niveau supérieur du fait que le système de bus est réglé sur le potentiel de masse, ce qui bloque la transmission de données.

8. Procédé selon la revendication 7,
**caractérisé en ce que**
après un temps d'attente, le participant de niveau supérieur débloque la transmission de données et recommence à surveiller s'il y a une transmission de données qu'il n'a pas lancée, la transmission de données est alors à nouveau bloquée et sinon le blocage est supprimé.

9. Procédé selon la revendication 1,
**caractérisé en ce que**
pendant des pauses dans la transmission de données, le premier participant surveille le système de bus pour constater des modifications des signaux et il prend des mesures adaptées si des signaux sont modifiés.

10. Procédé selon la revendication 1,
**caractérisé en ce que**
le système de bus est un système de bus LIN (réseau d'interconnexion locale).

11. Procédé selon la revendication 1,
**caractérisé en ce que**
quand le premier participant empêche que des données soient transmises sur le système de bus, cela est communiqué à une installation d'alarme (109) dans le véhicule.

12. Dispositif pour surveiller un système de bus (101 à 103) pour un véhicule comportant une unité d'entraînement et une zone verrouillable de véhicule dans lequel le système de bus comporte au moins trois participants (100, 104, 105, 107, 108), un premier participant (100) parmi les au moins trois participants du système de bus servant de participant de niveau supérieur et lançant chaque transmission de données sur le système de bus, au moins un deuxième participant (104) servant d'élément d'une installation qui verrouille le véhicule et au moins un troisième participant (105) étant placé hors de la zone verrouillable du véhicule,
**caractérisé en ce que**
le premier participant (100) surveille la transmission des données de telle manière que le premier participant, à chaque fois qu'il y a sur le système de bus (101 à 103) une transmission de données qu'il n'a pas lancée, prend des mesures afin d'empêcher que ces données soient transmises.

13. Unité de commande (100) pour surveiller un système de bus (101 à 103) pour un véhicule comportant une unité d'entraînement et une zone verrouillable de véhicule, dans laquelle le système de bus comporte au moins trois participants (100, 104, 105, 107, 108), l'unité de commande (100) parmi les au moins trois participants du système de bus servant de premier participant (100) de niveau supérieur et lançant chaque transmission de données sur le système de bus, au moins un deuxième participant (104) servant d'élément d'une installation qui verrouille le véhicule et au moins un troisième participant (105) étant placé hors de la zone verouillable du véhicule,
**caractérisé en ce que**
l'unité de commande (100) surveille la transmission des données de telle manière que l'unité de commande prend, à chaque fois qu'il y a sur le système de bus (101 à 103) une transmission de données que l'unité de commande elle-même n'a pas lancée, des mesures afin d'empêcher que les données soient transmises.
